# EUROPÄISCHE PATENTSCHRIFT

(11) **EP 3 673 475 B1**
(45) Veröffentlichungstag und Bekanntmachung des Hinweises auf die Patenterteilung: **06.08.2025**
(21) Anmeldenummer: 18728320.5
(22) Anmeldetag: 16.05.2018
(51) Int. Cl.: G08G 1/16, B60W 50/14, B60W 30/08, G06V 20/58, G06V 20/59

(54) **VERFAHREN ZUM BETREIBEN EINES ASSISTENZSYSTEMS FÜR EIN FAHRZEUG UND ASSISTENZSYSTEM**
METHOD FOR OPERATING AN ASSISTANCE SYSTEM FOR A VEHICLE AND ASSISTANCE SYSTEM
PROCÉDÉ POUR FAIRE FONCTIONNER UN SYSTÈME D'ASSISTANCE POUR UN VÉHICULE ET SYSTÈME D'ASSISTANCE

(30) Priorität: 21.08.2017 DE 102017214505
(43) Veröffentlichungstag der Anmeldung: 01.07.2020
(73) Patentinhaber: Bayerische Motoren Werke Aktiengesellschaft, 80809 München (DE)
(72) Erfinder: WOLTERS, Joris, 81541 München (DE); BADE, Florian, 80639 München (DE); BLUME, Moritz, 80797 München (DE); BUCHNER, Martin, 80807 München (DE); NIEMANN, Julia, 80634 München (DE); WOLFRAM, Michael, 85586 Poing (DE)
(86) Internationale Anmeldenummer: PCT/EP2018/062667
(87) Internationale Veröffentlichungsnummer: WO 2019/037905

(56) Entgegenhaltungen:
- EP-A1- 1 484 014
- JP-A- 2009 237 776
- JP-A- 2014 120 110
- JP-A- 2014 120 111
- JP-A- 2014 120 112
- JP-A- 2015 125 686

## Beschreibung

Die Erfindung betrifft ein Verfahren zum Betreiben eines Assistenzsystems für ein Fahrzeug sowie ein korrespondierendes Assistenzsystem, Computerprogramm und Computerprogrammprodukt.

Heutige Fahrzeuge können Sensoreinheiten wie beispielsweise einen Kamerasensor umfassen, der eine Kopfpose, Blickrichtung und/oder -position eines Benutzers erfasst, beispielsweise anhand von Gesichtsmerkmalen. Abhängig hiervon lässt sich beispielhaft eine Müdigkeit des Fahrers ermitteln.

Verfahren zum Betreiben eines Assistenzsystems für ein Fahrzeug sind beispielsweise aus den Dokumenten JP 2009 237776 A, EP 1 484 014 A1, JP 2014 120112 A oder JP 2015 125686 A bekannt.

Die Aufgabe, die der Erfindung zugrunde liegt, ist es, ein Verfahren zum Betreiben eines Assistenzsystems für ein Fahrzeug sowie ein korrespondierendes Assistenzsystem zu schaffen, welches beiträgt, eine Aufmerksamkeit des Fahrers präzise zu ermitteln.

Die Aufgabe wird gelöst durch die unabhängigen Patentansprüche. Vorteilhafte Ausgestaltungen sind in den Unteransprüchen gekennzeichnet.

Gemäß einem ersten Aspekt betrifft die Erfindung ein Verfahren zum Betreiben eines Assistenzsystems für ein Fahrzeug. Das Assistenzsystem umfasst eine Objektsensoreinrichtung zur Ermittlung eines Objektkennwerts, der Koordinaten eines Mittelpunkts eines Objekts im Umfeld des Fahrzeugs umfasst, wobei das Umfeld einen dreidimensionalen Raum extern bezüglich des Fahrzeugs bezeichnet, und eine Blicksensoreinrichtung zur Ermittlung eines Richtungskennwerts, der einen Blickrichtungsvektor umfasst und repräsentativ ist für eine Blickrichtung eines Fahrers des Fahrzeugs, sowie zur Ermittlung eines Positionskennwerts, der repräsentativ ist für eine Kopfposition des Fahrers.

Bei dem Verfahren werden der Objektkennwert, der Richtungskennwert sowie der Positionskennwert ermittelt; abhängig von dem Positionskennwert und dem Objektkennwert wird ein Projektionskennwert ermittelt, der repräsentativ ist für einen Vektor, der die Kopfposition mit dem Objekt verbindet; abhängig von dem Richtungskennwert und dem Projektionskennwert wird ein Winkelkennwert ermittelt, der repräsentativ ist für einen kleinsten Winkel (Φ) zwischen der Blickrichtung (2) und dem Vektor (4), der die Kopfposition (3) mit dem Objekt (20) verbindet; abhängig von dem Richtungs- und Positionskennwert wird ein erster Bereichskennwert ermittelt, der repräsentativ ist für ein geschätztes primäres Blickfeld des Fahrers, wobei der erste Bereichskennwert repräsentativ ist für einen ersten Bereich um die Blickrichtung mit einer maximalen horizontalen Abweichung von einschließlich 5° bis 10°; daraufhin wird abhängig von dem Richtungs- und Positionskennwert ein zweiter Bereichskennwert ermittelt, der repräsentativ ist für ein geschätztes peripheres Blickfeld des Fahrers, wobei der zweite Bereichskennwert repräsentativ ist für einen zweiten Bereich um die Blickrichtung mit einer maximalen horizontalen Abweichung von einschließlich 90° und einer maximalen vertikalen Abweichung von einschließlich 70°, und abhängig von dem Richtungs- und Positionskennwert ein dritter Bereichskennwert ermittelt wird, der repräsentativ ist für einen dritten Bereich mit einem vom Fahrer nicht wahrnehmbaren Blickfeld, und abhängig von dem ersten Bereichskennwert, dem zweiten Bereichskennwert, dem dritten Bereichskennwert und dem Winkelkennwert ein Aufmerksamkeitskennwert ermittelt, der repräsentativ ist für eine Wahrscheinlichkeit, dass das Objekt zumindest teilweise im Blickfeld des Fahrers liegt, und im Falle, dass der Winkelkennwert repräsentativ ist für einen Winkel innerhalb des dritten Bereichs, dem Aufmerksamkeitskennwert ein erster Zustand zugeordnet wird; im Falle, dass der Winkelkennwert repräsentativ ist für einen Winkel innerhalb des zweiten Bereichs und außerhalb des ersten Bereichs, dem Aufmerksamkeitskennwert ein zweiter Zustand zugeordnet wird; und im Falle, dass der Winkelkennwert repräsentativ ist für einen Winkel innerhalb des ersten Bereichs, dem Aufmerksamkeitskennwert ein dritter Zustand zugeordnet wird; und schließlich wird abhängig von dem dem Aufmerksamkeitskennwert zugeordneten Zustand eine Warnfunktion des Fahrzeugs aktiviert, wobei auf die Warnfunktion verzichtet werden kann, wenn dem Aufmerksamkeitswert der dritte Zustand zugeordnet wird; die Warnfunktion akustische und/oder haptische und/oder visuelle Hinweise umfasst, wenn dem Aufmerksamkeitswert der erste Zustand zugeordnet wird; und die Warnfunktion Hinweise des zweiten Zustand in abgemilderter Form umfasst, wenn dem Aufmerksamkeitswert der zweite Zustand zugeordnet wird.

In vorteilhafter Weise ermöglicht dies eine Abstimmung der Warnfunktion des Fahrzeugs und entsprechender Warnzeitpunkte auf den Fahrer. Insbesondere kann durch den Aufmerksamkeitskennwert angegeben werden, wie gut der Fahrer einzelne Objekte im Umfeld wahrnehmen kann, so dass gewährleistet werden kann, dass keine unnötigen Warnungen ausgegeben werden oder andere Warnungen erst zu spät ausgesprochen werden.

Bei der Blicksensoreinrichtung kann es sich insbesondere um eine Kamera handeln. Der Richtungskennwert kann einen Blickrichtungsvektor beschreiben oder umfassen. Alternativ oder zusätzlich kann der Richtungskennwert eine Kopfpose des Fahrers beschreiben. Die Kopfpose kann eine Drehung und/oder Neigung des Kopfes umfassen. Beispielhaft kann die Kopfpose über einen Nasenvektor beschrieben werden.

Bei der Objektsensoreinrichtung kann es sich um ebenfalls um eine Kamera handeln. Alternativ oder zusätzlich kann die Objektsensoreinrichtung eine Radar- und/oder Lidarsensoreinheit oder ähnliche Sensorik umfassen. Der Objektkennwert kann Koordinaten eines Mittelpunkts des Objekts beschreiben oder umfassen. Alternativ oder zusätzlich kann der Objektkennwert auch Koordinaten einer dem Fahrzeug zugewandten Kontur des Objekts oder seiner gesamten, dem Fahrzeug zugewandten Oberfläche umfassen. Bei dem Objekt kann es sich beispielsweise um ein anderes Fahrzeug, ein Hindernis, eine Straßenbegrenzung oder auch Verkehrsschilder handeln. Insbesondere handelt es sich bei dem Objekt um ein vom Straßenverlauf hervorstechenden Gegenstand, welcher die Aufmerksamkeit des Fahrers erfordert. In diesem Zusammenhang sind insbesondere andere Fahrzeuge oder Verkehrsteilnehmer zu nennen, beispielhaft Querverkehr. Mit dem Umfeld des Fahrzeugs wird hier und im Folgenden der dreidimensionale Raum extern bezüglich des Fahrzeugs beschrieben, insbesondere ein Teilbereich in Sichtweite und/oder -richtung des Fahrers.

Das geschätzte primäre Blickfeld des Fahrers entspricht beispielhaft der Grundfläche eines Kreis- oder Ellipsenkegels um den Nasenvektor. Der Öffnungswinkel des Kegels kann beispielhaft zwischen 0° und 90°, insbesondere zwischen beispielhaft 0° und 2° für einen Bereich des schärfsten Sehens, zwischen beispielhaft 5° und 10° für ein Entziffern von Zeichen, zwischen beispielhaft 5° und 30° für ein Wahrnehmen von Umrissen, oder zwischen beispielhaft 30° und 60° für ein Wahrnehmen von Farben betragen. Der Öffnungswinkel in der Horizontalen (Gierwinkel, engl. "yaw") bezüglich des Fahrzeugs kann sich von dem Öffnungswinkel in der Vertikalen (Neigung, engl. "pitch") bezüglich des Fahrzeugs unterscheiden. Beispielhaft beträgt der Öffnungswinkel in der Horizontalen bis zu 90°, in der Vertikalen hingegen beispielhaft lediglich bis zu 70°. Das geschätzte primäre Blickfeld kann auch als useful field of view bezeichnet werden. Insbesondere kann das geschätzte primäre Blickfeld einen Bereich beschreiben, den der Fahrer in 90 % der Fahrzeit betrachtet. Das geschätzte primäre Blickfeld beschreibt in anderen Worten einen Bereich, in dem der Fahrer Objekte wahrscheinlich wahrnimmt.

Als Warnfunktion des Fahrzeugs kommen akustische, haptische oder visuelle Hinweise in Frage. Beispielhaft kann ein visueller Hinweis gezielt in das Blickfeld des Fahrers projiziert werden, so dass das Objekt sichtbar hervorgehoben wird.

Abhängig von dem Richtungskennwert und dem Projektionskennwert wird ein Winkelkennwert ermittelt, der repräsentativ ist für einen kleinsten Winkel zwischen der Blickrichtung und dem Vektor, der die Kopfposition mit dem Objekt verbindet. Abhängig von dem Winkelkennwert wird der Aufmerksamkeitskennwert ermittelt.

Als kleinster Winkel wird in diesem Zusammenhang der Winkel zwischen der Blickrichtung und demjenigen Vektor verstanden, welcher die Kopfposition und diejenigen Koordinaten des Objekts verbindet, die am nächsten zu dem Bereich des geschätzten primären Blickfelds liegen. In anderen Worten können die Koordinaten also einen Punkt der Kontur des Objekts beschreiben, welcher dem Aufpunkt des Blickrichtungs- oder Nasenvektors in der Ebene des Objekts am nächsten liegt.

In einer weiteren vorteilhaften Ausgestaltung gemäß dem ersten Aspekt ist der Richtungskennwert repräsentativ für eine Kopfpose des Fahrers. Insbesondere beschreibt der Richtungskennwert also den Nasenvektor, nicht aber den tatsächlichen Blickrichtungsvektor. In vorteilhafter Weise kann so auf eine hochauflösende Kamera als Blicksensoreinrichtung verzichtet werden. Dies trägt zu einer kostengünstigen Herstellung des Assistenzsystems bei.

Bei dem Blickrichtungskennwert handelt es sich in diesem Zusammenhang insbesondere um den Nasenvektor. Der erste Bereichskennwert beschreibt insbesondere vorgenannte Grundfläche des Kreis- oder Ellipsenkegels mit der Abweichung als (horizontalem) Öffnungswinkel.

Gemäß dem ersten Aspekt wird abhängig von dem Richtungs- und Positionskennwert ein zweiter Bereichskennwert ermittelt, der repräsentativ ist für ein geschätztes peripheres Blickfeld des Fahrers. Abhängig von dem zweiten Bereichskennwert wird der Aufmerksamkeitskennwert ermittelt.

In vorteilhafter Weise ermöglicht dies eine Abstufung bei der Einschätzung, wie gut der Fahrer einzelne Objekte im Umfeld wahrnehmen kann. Insbesondere ermöglicht dies eine verbesserte Abstimmung der Warnfunktion des Fahrzeugs und entsprechender Warnzeitpunkte auf den Fahrer. Der (horizontale) Öffnungswinkel des Kegels um den Nasenvektor zur peripheren Wahrnehmung des Objekts kann in diesem Fall beispielhaft zwischen 60° und 90° betragen. Der Aufmerksamkeitskennwert kann in diesem Zusammenhang insbesondere eine Wahrscheinlichkeit angeben, mit der das Objekt in dem geschätzten primären Blickfeld des Fahrers liegt sowie eine Wahrscheinlichkeit, mit der das Objekt in dem geschätzten peripheren Blickfeld des Fahrers liegt.

Abhängig von dem Richtungs- und Positionskennwert wird ein dritter Bereichskennwert ermittelt, der repräsentativ ist für einen vom Fahrer nicht wahrnehmbares Blickfeld. Abhängig von dem dritten Bereichskennwert wird der Aufmerksamkeitskennwert ermittelt.

In vorteilhafter Weise ermöglicht dies eine weitere Abstufung bei der Einschätzung, wie gut der Fahrer einzelne Objekte im Umfeld wahrnehmen kann. Insbesondere ermöglicht dies eine verbesserte Abstimmung der Warnfunktion des Fahrzeugs und entsprechender Warnzeitpunkte auf den Fahrer. Der dritte Bereichskennwert ist hierbei beispielsweise repräsentativ für einen Bereich um den Nasenvektor mit einer horizontalen Abweichung von über 90° und/oder einer vertikalen Abweichung von über 70°. Der Aufmerksamkeitskennwert kann in diesem Zusammenhang insbesondere eine Wahrscheinlichkeit angeben, mit der das Objekt in dem geschätzten primären Blickfeld des Fahrers liegt, eine Wahrscheinlichkeit, mit der das Objekt in dem geschätzten peripheren Blickfeld des Fahrers liegt sowie eine Wahrscheinlichkeit, mit der das Objekt außerhalb des Blickfelds des Fahrers liegt.

Gemäß dem ersten Aspekt wird
- im Falle, dass der Winkelkennwert repräsentativ ist für einen Winkel außerhalb des zweiten Bereichs, dem Aufmerksamkeitskennwert ein erster Zustand zugeordnet;
- im Falle, dass der Winkelkennwert repräsentativ ist für einen Winkel innerhalb des zweiten Bereichs und außerhalb des ersten Bereichs, dem Aufmerksamkeitskennwert ein zweiter Zustand zugeordnet; und
- im Falle, dass der Winkelkennwert repräsentativ ist für einen Winkel innerhalb des ersten Bereichs, dem Aufmerksamkeitskennwert ein dritter Zustand zugeordnet. Abhängig von dem dem Aufmerksamkeitskennwert zugeordneten Zustand wird eine Warnfunktion des Fahrzeugs aktiviert.

Ist dem Aufmerksamkeitskennwert der dritte Zustand zugeordnet, so kann beispielhaft auf die Warnfunktion verzichtet werden. In diesem Fall ist davon auszugehen, dass der Fahrer das Objekt wahrgenommen hat. Ist dem Aufmerksamkeitskennwert der erste Zustand zugeordnet, ist hingegen davon auszugehen, dass der Fahrer das Objekt nicht wahrgenommen hat. In diesem Fall werden beispielhaft akustische und/oder haptische und/oder visuelle Hinweise ausgegeben. Ist dem Aufmerksamkeitskennwert der zweite Zustand zugeordnet, wird vermutet dass das Objekt zumindest peripher durch den Fahrer wahrgenommen wird. Eine Warnung kann entsprechend abgemildert oder unterdrückt werden. In vorteilhafter Weise kann so eine Reizüberflutung des Fahrers vermieden werden; in Gefahrensituationen oder ähnlichem kann so beigetragen werden, dass der Fahrer auf die Warnungen des Fahrzeugs reagiert.

In einer weiteren vorteilhaften Ausgestaltung gemäß dem ersten Aspekt ist der Richtungskennwert repräsentativ ist für einen Blickrichtungsvektor des Fahrers. Insbesondere umfasst der Richtungskennwert den tatsächlichen Blickrichtungsvektor. Darüber hinaus ist der Projektionskennwert repräsentativ für ein Vektorfeld, das die Kopfposition mit einer Kontur des Objekts verbindet. Abhängig von dem Projektionskennwert und dem Richtungskennwert wird ein vierter Zustand des Aufmerksamkeitskennwerts ermittelt, der repräsentativ ist für eine Wahrscheinlichkeit, dass die Blickrichtung des Fahrers innerhalb der Kontur des Objekts liegt. Abhängig von dem Projektionskennwert und dem Richtungskennwert wird alternativ oder zusätzlich ein fünfter Zustand des Aufmerksamkeitskennwerts ermittelt, der repräsentativ ist für eine Wahrscheinlichkeit, dass das Objekt zumindest teilweise innerhalb des peripheren Blickfelds des Fahrers liegt.

In vorteilhafter Weise kann so eine präzise Aussage über die Aufmerksamkeit des Fahrers getroffen werden.

Das Vektorfeld umfasst insbesondere einen oder mehrere Vektoren. Der vierte Zustand beschreibt beispielsweise den Fall, dass der Blickrichtungsvektor auf die Oberfläche des Objekts trifft. Im Falle, dass der Blickrichtungsvektor statt dem Nasenvektor ermittelt wird, kann der vierte Zustand eine genauere Aussage als der dritte Zustand liefern. Der fünfte Zustand beschreibt beispielsweise den Fall, dass der Blickrichtungsvektor nicht auf die Oberfläche des Objekts trifft, das Objekt allerdings in einem Bereich der peripheren Wahrnehmung um den Blickrichtungsvektor liegt. Im Falle, dass der Blickrichtungsvektor statt dem Nasenvektor ermittelt wird, kann der fünfte Zustand eine genauere Aussage als der zweite Zustand liefern. Insbesondere können der zweite und/oder dritte Zustand in diesem Fall als optionale Rückfallpositionen dienen.

Gemäß einem zweiten Aspekt betrifft die Erfindung ein Assistenzsystem für ein Fahrzeug. Das Assistenzsystem umfasst eine Objektsensoreinrichtung zur Ermittlung eines Objektkennwerts, der Koordinaten eines Mittelpunkts eines Objekts im Umfeld des Fahrzeugs umfasst, wobei das Umfeld einen dreidimensionalen Raum extern bezüglich des Fahrzeugs bezeichnet, und eine Blicksensoreinrichtung zur Ermittlung eines Richtungskennwerts, der einen Blickrichtungsvektor umfasst und repräsentativ ist für eine Blickrichtung eines Fahrers des Fahrzeugs, sowie zur Ermittlung eines Positionskennwerts, der repräsentativ ist für eine Kopfposition des Fahrers. Weiterhin umfasst das Assistenzsystem eine Steuereinheit, die eingerichtet ist das Verfahren gemäß dem ersten Aspekt durchzuführen.

Gemäß einem dritten Aspekt betrifft die Erfindung ein Computerprogramm zum Betreiben eines Assistenzsystems. Das Computerprogramm ist ausgebildet, ein Verfahren gemäß dem ersten Aspekt bei seiner Ausführung auf einer Datenverarbeitungsvorrichtung durchzuführen.

Gemäß einem vierten Aspekt betrifft die Erfindung ein Computerprogrammprodukt umfassend ausführbaren Programmcode. Der Programmcode führt bei Ausführung durch eine Datenverarbeitungsvorrichtung das Verfahren gemäß dem ersten Aspekt aus.

Ausführungsbeispiele der Erfindung sind im Folgenden anhand der schematischen Zeichnungen näher erläutert.

Es zeigen:
- Figur 1: ein Fahrzeug mit dem erfindungsgemäßen Assistenzsystem;
- Figur 2: ein beispielhaftes Blickfeld eines Fahrers in Draufsicht;
- Figur 3: ein beispielhaftes Blickfeld des Fahrers in Perspektivansicht; und
- Figur 4: ein beispielhaftes Ablaufdiagramm eines Verfahrens zum Betreiben des Assistenzsystems gemäß Figur 1.

Elemente gleicher Konstruktion oder Funktion sind figurenübergreifend mit den gleichen Bezugszeichen versehen.

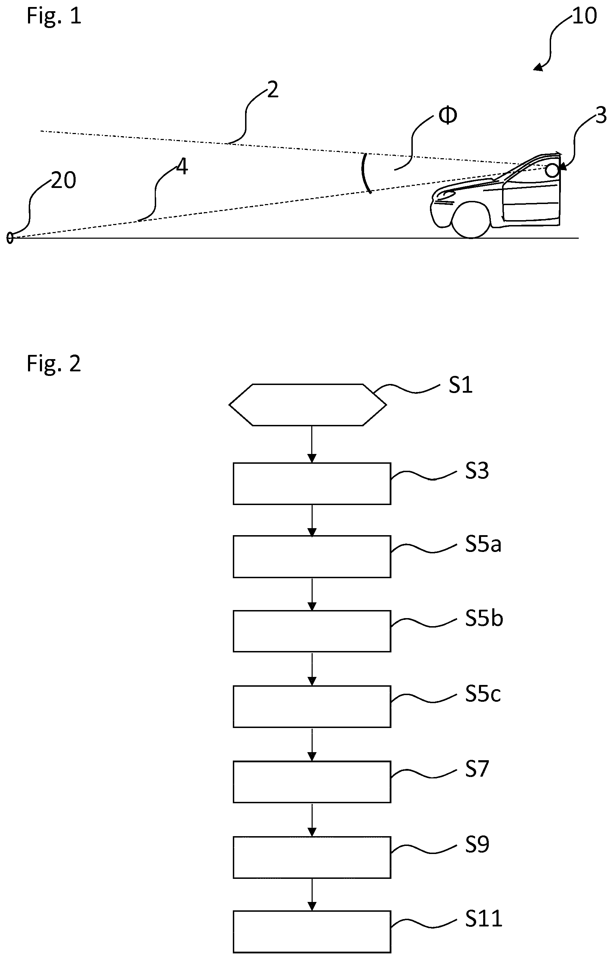

Figur 1 zeigt ein Fahrzeug mit einem Assistenzsystem 10, welches eingerichtet ist, eine wahrscheinliche Richtung, in welche der Fahrer sieht (nachfolgend "Blickrichtung") zu detektieren und abhängig davon weitere Schritte einzuleiten. Beispielhaft kann die ermittelte Blickrichtung genutzt werden, um die Aufmerksamkeit des Fahrers zu überwachen und ggf. Warnungen auszusprechen.

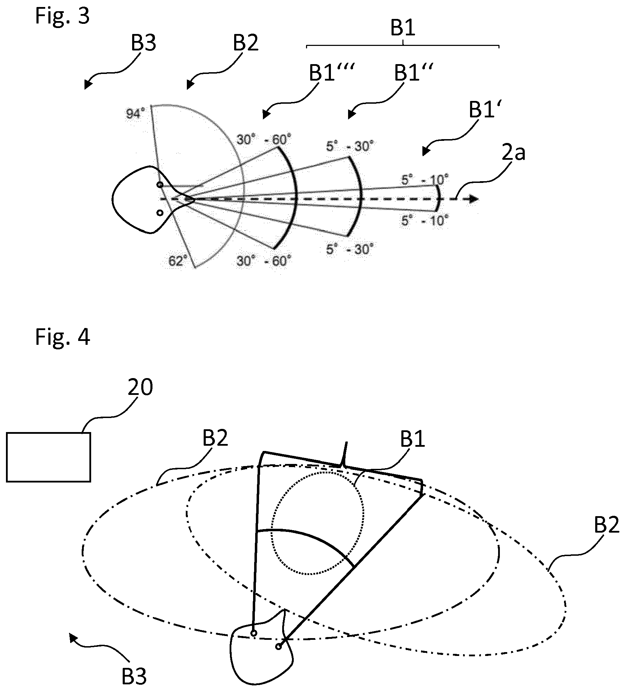

Das Assistenzsystem 10 umfasst eine Blicksensoreinrichtung (nicht näher dargestellt) mit einer Kamera, die dem Fahrer zugewandt angeordnet und eingerichtet ist, eine Blickrichtung 2 des Fahrers als Richtungskennwert und eine Kopfposition 3 des Fahrers als Positionskennwert zu erfassen, beispielhaft anhand Gesichtsmerkmalen wie der Augen- und/oder Nasenposition. Insbesondere wird hierbei eine Kopfpose des Fahrers ermittelt, also eine Neigung und/oder ein Gierwinkel seines Kopfs, um bestimmen zu können, in welchen Bereichen der Fahrer ein gutes Sichtvermögen aufweist. Beispielhaft entspricht die Blickrichtung einem Nasenvektor 2a (vgl. Figur 3). Die Blicksensoreinheit kann darüber hinaus eine optionale Beleuchtungseinrichtung umfassen.

Das Assistenzsystem 10 umfasst ferner eine Objektsensoreinrichtung (nicht näher dargestellt) mit einer Kamera, einer Radar- oder einer Lidarsensoreinheit, die dem Fahrer abgewandt angeordnet und eingerichtet ist, ein Objekt 20 zu erfassen und dessen räumliche Lage bezüglich des Fahrzeugs bzw. des Fahrers als Objektkennwert zu ermitteln. Insbesondere können hier Koordinaten einer Kontur des Objekts oder wenigstens seines Mittelpunkts bereitgestellt werden.

Das Assistenzsystem 10 umfasst des Weiteren eine Steuereinheit (nicht näher dargestellt) mit einem Daten- und Programmspeicher, in dem ein Programm zum Betreiben des Assistenzsystems 10 gespeichert ist, welches anhand des Ablaufdiagramms der Figur 2 im Folgenden näher erläutert ist.

Das Programm wird in einem Schritt S1 gestartet, in dem beispielsweise Variablen initialisiert werden. Weiterhin wird ein Objektkennwert durch die Objektsensoreinrichtung ermittelt sowie ein Richtungs- und Positionskennwert durch die Blicksensoreinrichtung ermittelt. Das Programm wird anschließend in einem Schritt S3 fortgesetzt.

In dem Schritt S3 wird abhängig von dem Positionskennwert und dem Objektkennwert ein Projektionskennwert ermittelt, der repräsentativ ist für einen Vektor 4, der die Kopfposition 3 mit dem Objekt 20 verbindet (vgl. Fig. 1). Das Programm wird anschließend in einem Schritt S5a fortgesetzt.

In dem Schritt S5a wird abhängig von dem Richtungs- und Positionskennwert ein erster Bereichskennwert ermittelt, der repräsentativ ist für ein geschätztes primäres Blickfeld B1 des Fahrers (vgl. Fig. 3-4). Bei dem primären Blickfeld B1 handelt es sich vorliegend um einen Bereich um den Nasenvektor 2a mit einer maximalen horizontalen Abweichung von etwa 60°. Der Bereich kann auch als Grundfläche eines Kreis- oder Ellipsenkegels betrachtet werden. Je nach Anforderung an die Genauigkeit kann das primäre Blickfeld B1 dabei mehrere Teilbereiche umfassen. So kann das primäre Blickfeld B1 in einen Bereich B1' mit einer maximalen horizontalen Abweichung von 5° bis 10° unterteilt werden, in dem der Fahrer (gerade noch) Zeichen entziffern kann; in einen Bereich B1" mit einer maximalen horizontalen Abweichung von 5° bis 30°, in dem der Fahrer (gerade noch) Umrisse wahrnehmen kann; und in einen Bereich B1‴ mit einer maximalen horizontalen Abweichung von 30° bis 60°, in dem der Fahrer (gerade noch) Farben wahrnehmen kann.

In vorliegender Ausführungsvariante bezeichnet das primäre Blickfeld B1 einen Bereich mit einer maximalen horizontalen Abweichung von einschließlich 7° und einer maximalen vertikalen Abweichung von einschließlich 9°. Dieser Bereich kann auch als useful field of view bezeichnet werden.

In dieser Ausführungsvariante wird das Programm anschließend in einem Schritt S5b fortgesetzt. In anderen Ausführungsvarianten kann das Programm jedoch auch in einem Schritt S5c oder S7 fortgesetzt werden.

In dem Schritt S5b wird abhängig von dem Richtungs- und Positionskennwert ein zweiter Bereichskennwert ermittelt, der repräsentativ ist für ein geschätztes peripheres Blickfeld B2 des Fahrers. Bei dem peripheren Blickfeld B2 handelt es sich vorliegend um einen Bereich um den Nasenvektor 2a mit einer maximalen horizontalen Abweichung von bis zu 94°. Wie in Figur 3 dargestellt kann die horizontale Abweichung dabei asymmetrisch um den Nasenvektor 2a sein. Der eingeschränkte Sichtbereich des einen Auges zur Nase hin wird jedoch durch das entsprechend andere Auge kompensiert.

Als untere Grenze der horizontalen Abweichung kann die verwendete obere Grenze des primären Blickfelds B1 eingesetzt werden, beispielhaft also maximal 60°. In vorliegend Ausführungsbeispiel beträgt die untere Grenze 7°. Eine maximale vertikale Abweichung beträgt ferner einschließlich 70°. Eine untere Grenze der Abweichung des peripheren Blickfelds B2 kann analog zu obiger Beschreibung angegeben werden und beträgt beispielhaft 9°.

In dieser Ausführungsvariante wird das Programm anschließend in dem Schritt S5c fortgesetzt. In anderen Ausführungsvarianten kann das Programm jedoch auch in dem Schritt S7 fortgesetzt werden.

In dem Schritt S5c wird abhängig von dem Richtungs- und Positionskennwert ein dritter Bereichskennwert ermittelt, der repräsentativ ist für einen vom Fahrer nicht wahrnehmbares Blickfeld B3. Bei dem nicht wahrnehmbaren Blickfeld B3 handelt es sich insbesondere um einen Bereich außerhalb des peripheren Blickfelds B2. Die horizontale Abweichung beträgt in diesem Zusammenhang insbesondere über 90°, beispielhaft über 94°. Alternativ oder zusätzlich beträgt die vertikale Abweichung hierbei beispielhaft über 70°. Wie in Figur 4 dargestellt ist das Objekt 20 außerhalb des primären und peripheren Blickfelds B1, B2 und vom Fahrer daher nicht wahrnehmbar. Das Programm wird anschließend in dem Schritt S7 fortgesetzt.

In dem Schritt S7 wird abhängig von dem Richtungskennwert und dem Projektionskennwert ein Winkelkennwert ermittelt, der repräsentativ ist für einen kleinsten Winkel Φ zwischen der Blickrichtung 2 und dem Vektor 4, der die Kopfposition 3 mit dem Objekt 20 verbindet (vgl. Fig. 1). Das Programm wird anschließend in einem Schritt S9 fortgesetzt.

In dem Schritt S9 wird abhängig von dem Winkelkennwert und dem entsprechenden Bereichskennwert ein Aufmerksamkeitskennwert ermittelt, der repräsentativ ist für eine Wahrscheinlichkeit, dass das Objekt 20 zumindest teilweise im Blickfeld des Fahrers liegt. In diesem Zusammenhang wird in dem Schritt S9 insbesondere geprüft ob
- der Winkel Φ außerhalb des peripheren Blickfelds B3 liegt. In diesem Fall wird dem Aufmerksamkeitskennwert ein erster Zustand zugeordnet;
- der Winkel Φ innerhalb des peripheren Blickfelds B2 und außerhalb des primären Blickfelds B1 liegt. In diesem Fall wird dem Aufmerksamkeitskennwert ein zweiter Zustand zugeordnet; oder ob
- der Winkel Φ innerhalb des primären Blickfelds B1 liegt. In diesem Fall wird dem Aufmerksamkeitskennwert ein dritter Zustand zugeordnet.

Beispielhaft werden hierzu lediglich der ermittelte Winkel Φ sowie die oben aufgeführten Grenzwinkel verglichen. Das Programm wird anschließend in einem Schritt S11 fortgesetzt.

In dem Schritt S11 wird abhängig von dem Aufmerksamkeitskennwert eine Warnfunktion des Fahrzeugs aktiviert. Beispielhaft wird eine Warnung lediglich dann ausgegeben, wenn dem Aufmerksamkeitskennwert der erste Zustand zugeordnet ist. Das Programm wird im Anschluss beendet.

In einem nicht dargestellten zweiten Ausführungsbeispiel ist die Blicksensoreinrichtung eingerichtet, zusätzlich zu der Kopfpose einen tatsächlichen Blickrichtungsvektor als Blickrichtung 2 zu ermitteln, beispielhaft anhand einer Pupillenposition des Fahrers. Die Programmschritte S1 und S3 werden analog zu dem Ablaufdiagramm nach Figur 2 durchgeführt. Der Projektionskennwert ist in diesem Fall jedoch repräsentativ für ein Vektorfeld, welches die Kopfposition 3 mit einer Kontur des Objekts 20 verbindet. Das Programm wird im Anschluss an Schritt S3 in einem Schritt S4 fortgesetzt.

In dem Schritt S4 wird abhängig von dem Projektionskennwert und dem Richtungskennwert ein vierter Zustand des Aufmerksamkeitskennwerts ermittelt, der repräsentativ ist für eine Wahrscheinlichkeit, dass die Blickrichtung des Fahrers innerhalb der Kontur des Objekts liegt. Insbesondere wird in dem Schritt S4 also ermittelt, ob der Blickrichtungsvektor auf eine dem Fahrzeug zugewandte Oberfläche des Objekts 20 trifft. Hierzu können beispielhaft ebenfalls die entsprechenden Winkel zwischen den einzelnen Vektoren 4 des Vektorfelds und des Blickrichtungsvektors ermittelt und verglichen werden. Ist dem Aufmerksamkeitskennwert der vierte Zustand zugeordnet, so kann davon ausgegangen werden, dass der Fahrer das Objekt mit hoher Sicherheit wahrgenommen hat. Auf eine Warnung kann dann verzichtet werden. Das Programm kann anschließend beendet werden.

Alternativ, im Falle, dass der Blickrichtungsvektor nicht auf die dem Fahrzeug zugewandte Oberfläche des Objekts 20 trifft, wird geprüft, ob das Objekt 20 in dem peripheren Blickfeld B2 des Fahrers liegt. Analog zu den Schritten S5a bis S9 wird in diesem Zusammenhang insbesondere geprüft ob der Winkel Φ zwischen dem tatsächlichen Blickrichtungsvektor 2 und dem Vektor 4 innerhalb des peripheren Blickfelds B2 und außerhalb des primären Blickfelds B1 liegt. Ist dies der Fall, so kann davon ausgegangen werden, dass der Fahrer das Objekt mit hoher Sicherheit peripher wahrgenommen hat. Dem Aufmerksamkeitskennwert wird in diesem Zusammenhang ein fünfter Zustand zugeordnet. Auf eine Warnung kann dann beispielhaft ebenfalls verzichtet werden. Das Programm kann anschließend beendet werden.

Im Falle, dass die Blicksensoreinrichtung im Betrieb degradiert, beispielhaft also eine sichere Aussage über den Blickrichtungsvektor nicht mehr getroffen werden kann, jedoch die Kopfpose weiterhin ermittelt werden kann, kann das Programm in dem entsprechenden Programmschritt des Ablaufdiagramms gemäß Figur 2 fortgesetzt werden, um den Aufmerksamkeitskennwert lediglich anhand des ersten, zweiten und dritten Zustands zu ermitteln.

In vorteilhafter Weise werden dem Fahrzeug durch die beschriebenen Verfahren Information bereitgestellt, welche Objekte im Umfeld des Fahrzeugs durch den Fahrer wahrnehmbar sind bzw. wahrscheinlich wahrgenommen werden. Die aufgeführten Zustände (erster bis fünfter Zustand) können beispielhaft also Grundlage zur Ausgabe einer Warnfunktion dienen und/oder als Ausgabesignal weiteren Assistenzsystemen des Fahrzeugs bereitgestellt werden. Dies ermöglicht insbesondere eine Anpassung der Wiedergabe von Informations- und Unterhaltungsangeboten auf das Umfeld des Fahrers.

Zusammenfassend wird dies ermöglicht, indem ermittelt wird, wie gut der Fahrer einzelne Objekte im Umfeld wahrnehmen kann. Dies geschieht durch das Ermitteln der Kopfpose und -position des Fahrers durch eine auf den Fahrer gerichtete Kamera. Um die Wirtschaftlichkeit des Produkts zu gewährleisten, wird beispielhaft verzichtet auf ein Ermitteln des Blickwinkels des Fahrers, was eine Kamera mit höherer Auflösung erfordern würde. Die Kopfpose und -position des Fahrers werden genutzt, um den kleinsten Winkel zu dem vom Fahrzeug vermessenen Objekt zu berechnen. Der kleinste Winkel zum Objekt wird benutzt, um zu bestimmen, ob das Objekt in entweder einem der drei folgenden Bereiche liegt:
- wahrscheinlich gesehen vom Fahrer: wenn der Winkel zum Objekt klein genug ist, dass das Objekt sich mit dem useful field of view überschneidet, also dem Bereich, in dem sich die Augen des Fahrers in 90% der Fahrzeit befinden.
- wahrscheinlich im peripheren Bereich gesehen vom Fahrer: wenn das Objekt nicht in dem ersten Bereich liegt, aber trotzdem in einem Bereich, in dem es peripher durch der Fahrer wahrgenommen werden kann.
- nicht gesehen: wenn der Winkel zum Objekt groß genug ist, dass es nicht vom Fahrer wahrgenommen werden kann.

Mit Vorteil kann das Assistenzsystem skalierbar für Anpassungen der Sensoreigenschaften sein. Wenn die Blicksensoreinrichtung ausgebildet ist, einen Fahrerblickwinkel zu ermitteln, wird dieser Blickwinkel anstatt der Kopfpose zur Auswertung verwendet. Dadurch sind die oben aufgeführten drei Basiszustände erweiterbar um folgende Zustände:
- gesehen: der Blick des Fahrers überschneidet die Objektfläche.
- peripher gesehen: der Blick des Fahrers überschneidet die Objektfläche nicht, aber das Objekt liegt sicher im peripheren Bereich.

Im Fall, dass die Blicksensoreinrichtung im Betrieb in einen Zustand degradiert, in dem nur die Kopfpose ermittelt werden kann, können oben aufgeführte drei Basiszustände als Rückfallposition zur Auswertung dienen.

### Bezugszeichenliste

- 10: Assistenzsystem
- 20: Objekt
- 2: Blickrichtung
- 2a: Nasenvektor
- 3: Kopfposition
- 4: Vektor
- Φ: Winkel
- B1... B3: Blickfeld
- S1... S11: Programmschritte

## Patentansprüche

1. Verfahren zum Betreiben eines Assistenzsystems (10) für ein Fahrzeug, umfassend eine Objektsensoreinrichtung und eine Blicksensoreinrichtung, wobei bei dem Verfahren
- ein Objektkennwert durch die Objektsensoreinrichtung ermittelt wird, der Koordinaten eines Mittelpunkts eines Objekts (20) im Umfeld des Fahrzeugs umfasst, wobei das Umfeld einen dreidimensionalen Raum extern bezüglich des Fahrzeugs bezeichnet,
- ein Richtungskennwert durch die Blicksensoreinrichtung ermittelt wird, der einen Blickrichtungsvektor umfasst und repräsentativ ist für eine Blickrichtung (2) eines Fahrers des Fahrzeugs sowie ein Positionskennwert durch die Blicksensoreinrichtung ermittelt wird, der repräsentativ ist für eine Kopfposition (3) des Fahrers,
- abhängig von dem Positionskennwert und dem Objektkennwert ein Projektionskennwert ermittelt wird, der repräsentativ ist für einen Vektor (4), der die Kopfposition (3) mit dem Objekt (20) verbindet,
- abhängig von dem Richtungskennwert und dem Projektionskennwert ein Winkelkennwert ermittelt wird, der repräsentativ ist für einen kleinsten Winkel (Φ) zwischen der Blickrichtung (2) und dem Vektor (4), der die Kopfposition (3) mit dem Objekt (20) verbindet,
- abhängig von dem Richtungs- und Positionskennwert ein erster Bereichskennwert ermittelt wird, der repräsentativ ist für ein geschätztes primäres Blickfeld (B1) des Fahrers, wobei der erste Bereichskennwert repräsentativ ist für einen ersten Bereich um die Blickrichtung mit einer maximalen horizontalen Abweichung von einschließlich 5° bis 10°,
- abhängig von dem Richtungs- und Positionskennwert ein zweiter Bereichskennwert ermittelt wird, der repräsentativ ist für ein geschätztes peripheres Blickfeld des Fahrers, wobei der zweite Bereichskennwert repräsentativ ist für einen zweiten Bereich um die Blickrichtung mit einer maximalen horizontalen Abweichung von einschließlich 90° und einer maximalen vertikalen Abweichung von einschließlich 70°, und
- abhängig von dem Richtungs- und Positionskennwert ein dritter Bereichskennwert ermittelt wird, der repräsentativ ist für einen dritten Bereich mit einem vom Fahrer nicht wahrnehmbaren Blickfeld, und
- abhängig von dem ersten Bereichskennwert, dem zweiten Bereichskennwert, dem dritten Bereichskennwert und dem Winkelkennwert ein Aufmerksamkeitskennwert ermittelt wird, der repräsentativ ist für eine Wahrscheinlichkeit, dass das Objekt (20) zumindest teilweise im Blickfeld des Fahrers liegt, und
-- im Falle, dass der Winkelkennwert repräsentativ ist für einen Winkel innerhalb des dritten Bereichs, dem Aufmerksamkeitskennwert ein erster Zustand zugeordnet wird;
-- im Falle, dass der Winkelkennwert repräsentativ ist für einen Winkel innerhalb des zweiten Bereichs und außerhalb des ersten Bereichs, dem Aufmerksamkeitskennwert ein zweiter Zustand zugeordnet wird; und
-- im Falle, dass der Winkelkennwert repräsentativ ist für einen Winkel innerhalb des ersten Bereichs, dem Aufmerksamkeitskennwert ein dritter Zustand zugeordnet wird, und
- abhängig von dem dem Aufmerksamkeitskennwert zugeordneten Zustand eine Warnfunktion des Fahrzeugs aktiviert wird, wobei
-- auf die Warnfunktion verzichtet werden kann, wenn dem Aufmerksamkeitswert der dritte Zustand zugeordnet wird;
-- die Warnfunktion akustische und/oder haptische und/oder visuelle Hinweise umfasst, wenn dem Aufmerksamkeitswert der erste Zustand zugeordnet wird; und
-- die Warnfunktion Hinweise des zweiten Zustand in abgemilderter Form umfasst, wenn dem Aufmerksamkeitswert der zweite Zustand zugeordnet wird.

2. Verfahren nach Anspruch 1, bei dem der Richtungskennwert repräsentativ ist für eine Kopfpose des Fahrers.

3. Verfahren nach einem der vorstehenden Ansprüche, bei dem
- der Richtungskennwert repräsentativ ist für einen Blickrichtungsvektor des Fahrers,
- der Projektionskennwert repräsentativ ist für ein Vektorfeld, das die Kopfposition mit einer Kontur des Objekts verbindet,
- abhängig von dem Projektionskennwert und dem Richtungskennwert ein vierter Zustand des Aufmerksamkeitskennwerts ermittelt wird, der repräsentativ ist für eine Wahrscheinlichkeit, dass die Blickrichtung des Fahrers innerhalb der Kontur des Objekts liegt, und
- abhängig von dem Projektionskennwert und dem Richtungskennwert ein fünfter Zustand des Aufmerksamkeitskennwerts ermittelt wird, der repräsentativ ist für eine Wahrscheinlichkeit, dass das Objekt zumindest teilweise innerhalb des peripheren Blickfelds des Fahrers liegt.

4. Assistenzsystem für ein Fahrzeug, umfassend
- eine Objektsensoreinrichtung zur Ermittlung eines Objektkennwerts, der Koordinaten eines Mittelpunkts eines Objekts im Umfeld des Fahrzeugs umfasst, wobei das Umfeld einen dreidimensionalen Raum extern bezüglich des Fahrzeugs bezeichnet,
- eine Blicksensoreinrichtung zur Ermittlung eines Richtungskennwerts, der einen Blickrichtungsvektor umfasst und der repräsentativ ist für eine Blickrichtung eines Fahrers des Fahrzeugs, sowie zur Ermittlung eines Positionskennwerts, der repräsentativ ist für eine Kopfposition des Fahrers, und
- eine Steuereinheit, die eingerichtet ist das Verfahren nach einem der Ansprüche 1 bis 3 durchzuführen.

5. Computerprogramm zum Betreiben eines Assistenzsystems, wobei das Computerprogramm ausgebildet ist, ein Verfahren nach einem der Ansprüche 1 bis 3 bei seiner Ausführung in einem Assistenzsystem gemäß Anspruch 4 durchzuführen.

6. Computerprogrammprodukt umfassend ausführbaren Programmcode, wobei der Programmcode bei Ausführung in einem Assistenzsystem gemäß Anspruch 4 das Verfahren nach einem der Ansprüche 1 bis 3 ausführt.

## Claims

1. Method for operating an assistance system (10) for a vehicle comprising an object sensor device and a viewing sensor device, the method including
- ascertaining by way of the object sensor device an object characteristic value which comprises coordinates of a centre point of an object (20) in the vicinity of the vehicle, the vicinity designating a three-dimensional space externally with respect to the vehicle,
- ascertaining by way of the viewing sensor device a direction characteristic value which comprises a viewing direction vector and is representative of a viewing direction (2) of a driver of the vehicle, and ascertaining by way of the viewing sensor device a position characteristic value which is representative of a head position (3) of the driver,
- depending on the position characteristic value and the object characteristic value, ascertaining a projection characteristic value which is representative of a vector (4) connecting the head position (3) with the object (20),
- depending on the direction characteristic value and the projection characteristic value, ascertaining an angle characteristic value which is representative of the smallest angle (Φ) between the viewing direction (2) and the vector (4) connecting the head position (3) with the object (20),
- depending on the direction and position characteristic values, ascertaining a first region characteristic value which is representative of an estimated primary field of view (B1) of the driver, wherein the first region characteristic value is representative of a first region around the viewing direction with a maximum horizontal deviation of including 5° to 10°,
- depending on the direction and position characteristic values, ascertaining a second region characteristic value which is representative of an estimated peripheral field of view of the driver, wherein the second region characteristic value is representative of a second region around the viewing direction with a maximum horizontal deviation of including 90° and a maximum vertical deviation of including 70°, and
- depending on the direction and position characteristic values, ascertaining a third region characteristic value which is representative of a third region with a field of view that is not perceivable by the driver, and
- depending on the first region characteristic value, the second region characteristic value, the third region characteristic value and the angle characteristic value, ascertaining an attention characteristic value which is representative of a probability that the object (20) is at least partially within the field of view of the driver, and
-- in the case that the angle characteristic value is representative of an angle within the third region, assigning the attention characteristic value a first state;
-- in the case that the angle characteristic value is representative of an angle within the second region and outside the first region, assigning the attention characteristic value a second state; and
**--** in the case that the angle characteristic value is representative of an angle within the first region, assigning the attention characteristic value a third state, and
- depending on the state assigned to the attention characteristic value, activating a warning function of the vehicle, wherein
-- the warning function can be omitted if the attention value is assigned the third state;
-- the warning function comprises audible and/or haptic and/or visual indications if the attention value is assigned the first state; and
-- the warning function comprises indications of the second state in a mitigated form if the attention value is assigned the second state.

2. Method according to Claim 1, wherein the direction characteristic value is representative of a head position of the driver.

3. Method according to either of the preceding claims, wherein
- the direction characteristic value is representative of a viewing direction vector of the driver,
- the projection characteristic value is representative of a vector field that connects the head position with a contour of the object,
- depending on the projection characteristic value and the direction characteristic value, a fourth state of the attention characteristic value is ascertained, which is representative of a probability that the viewing direction of the driver is within the contour of the object, and
- depending on the projection characteristic value and the direction characteristic value, a fifth state of the attention characteristic value is ascertained, which is representative of a probability that the object is at least partially within the peripheral field of view of the driver.

4. Assistance system for a vehicle, comprising
- an object sensor device for ascertaining an object characteristic value which comprises coordinates of a centre point of an object in the vicinity of the vehicle, the vicinity designating a three-dimensional space externally with respect to the vehicle,
- a viewing sensor device for ascertaining a direction characteristic value which comprises a viewing direction vector and which is representative of a viewing direction of a driver of the vehicle, and for ascertaining a position characteristic value which is representative of a head position of the driver, and
- a control unit, which is set up to carry out the method according to any of Claims 1 to 3.

5. Computer program for operating an assistance system, wherein the computer program is designed to carry out a method according to any of Claims 1 to 3 when it is executed in an assistance system according to Claim 4.

6. Computer program product comprising executable program code, wherein the program code carries out the method according to any of Claims 1 to 3 when it is executed in an assistance system according to Claim 4.

## Revendications

1. Procédé pour faire fonctionner un système d'assistance (10) pour un véhicule, comprenant un dispositif de détection d'objets et un dispositif de détection de regard, dans lequel
- une valeur caractéristique d'objet est déterminée par le dispositif de détection d'objets, laquelle comprend les coordonnées d'un centre d'un objet (20) dans l'environnement du véhicule, l'environnement désignant un espace tridimensionnel externe par rapport au véhicule,
- une valeur caractéristique de direction est déterminée par le dispositif de détection de regard, qui comprend un vecteur de direction du regard et est représentative d'une direction du regard (2) d'un conducteur du véhicule, et une valeur caractéristique de position est déterminée par le dispositif de détection de regard, qui est représentative d'une position de la tête (3) du conducteur,
- en fonction de la valeur caractéristique de position et de la valeur caractéristique d'objet, une valeur caractéristique de projection est déterminée, qui est représentative d'un vecteur (4) reliant la position de la tête (3) à l'objet (20),
- en fonction de la valeur caractéristique de direction et de la valeur caractéristique de projection, une valeur caractéristique d'angle est déterminée, qui est représentatif d'un angle minimal (Φ) entre la direction du regard (2) et le vecteur (4) reliant la position de la tête (3) à l'objet (20),
- en fonction de la valeur caractéristique de direction et de la valeur caractéristique de position, une première valeur caractéristique de zone est déterminée, qui est représentative d'un champ de vision primaire estimé (B1) du conducteur, la première valeur caractéristique de zone étant représentative d'une première zone autour de la direction du regard avec une déviation horizontale maximale comprise entre 5° et 10° inclus,
- en fonction de la valeur caractéristique de direction et de position, une deuxième valeur caractéristique de zone est déterminée, qui est représentative d'un champ de vision périphérique estimé du conducteur, la deuxième valeur caractéristique de zone étant représentative d'une deuxième zone autour de la direction du regard avec une déviation horizontale maximale de 90° inclus et une déviation verticale maximale de 70° inclus, et
- en fonction de la valeur caractéristique de direction et de position, une troisième valeur caractéristique de zone est déterminé, qui est représentative d'une troisième zone avec un champ de vision non perceptible par le conducteur, et
- en fonction de la première valeur caractéristique de zone, de la deuxième valeur caractéristique de zone, de la troisième valeur caractéristique de zone et de la valeur caractéristique d'angle, une valeur caractéristique d'attention est déterminée, qui est représentative d'une probabilité que l'objet (20) se trouve au moins partiellement dans le champ de vision du conducteur, et
- dans le cas où la valeur caractéristique d'angle est représentative d'un angle se trouvant à l'intérieur de la troisième zone, un premier état est attribué à la valeur caractéristique d'attention ;
- dans le cas où la valeur caractéristique d'angle est représentative d'un angle se trouvant à l'intérieur de la deuxième zone et à l'extérieur de la première zone, un deuxième état est attribué à la valeur caractéristique d'attention ; et
- dans le cas où la valeur caractéristique angulaire est représentative d'un angle à l'intérieur de la première zone, la valeur caractéristique d'attention est associée à un troisième état, et
- en fonction de l'état associé à la valeur caractéristique d'attention, une fonction d'avertissement du véhicule est activée, comme suit
- il est possible de renoncer à la fonction d'avertissement si le troisième état est associé à la valeur d'attention ;
- la fonction d'avertissement comprend des indications acoustiques et/ou haptiques et/ou visuelles, lorsque le premier état est attribué à la valeur d'attention ; et
- la fonction d'avertissement comprend des indications du deuxième état sous une forme atténuée lorsque le deuxième état est attribué à la valeur d'attention.

2. Procédé selon la revendication 1, dans lequel la valeur caractéristique de direction est représentative d'une posture de la tête du conducteur.

3. Procédé selon l'une des revendications précédentes, dans lequel
- la valeur caractéristique de direction est représentative d'un vecteur de direction du regard du conducteur,
- la valeur caractéristique de projection est représentative d'un champ vectoriel qui relie la position de la tête à un contour de l'objet,
- en fonction de la valeur caractéristique de projection et de la valeur caractéristique de direction, un quatrième état de la valeur caractéristique d'attention est déterminé, qui est représentatif d'une probabilité que la direction du regard du conducteur se trouve à l'intérieur du contour de l'objet, et
- en fonction de la valeur caractéristique de projection et de la valeur caractéristique de direction, un cinquième état de la valeur caractéristique d'attention est déterminé, qui est représentatif d'une probabilité que l'objet se trouve au moins en partie à l'intérieur du champ de vision périphérique du conducteur.

4. Système d'assistance pour un véhicule, comprenant
- un dispositif de détection d'objets pour déterminer une valeur caractéristique d'objet qui comprend les coordonnées d'un centre d'un objet dans l'environnement du véhicule, l'environnement désignant un espace tridimensionnel externe par rapport au véhicule,
- un dispositif de détection de regard pour déterminer une valeur caractéristique de direction qui comprend un vecteur de direction du regard et qui est représentative d'une direction du regard d'un conducteur du véhicule, ainsi que pour déterminer une valeur caractéristique de position qui est représentative d'une position de la tête du conducteur, et
- une unité de commande qui est conçue pour mettre en œuvre le procédé selon l'une des revendications 1 à 3.

5. Programme d'ordinateur pour faire fonctionner un système d'assistance, le programme informatique étant conçu pour mettre en œuvre un procédé selon l'une des revendications 1 à 3 lors de son exécution dans un système d'assistance selon la revendication 4.

6. Produit de programme d'ordinateur comprenant un code programme exécutable, le code programme, lorsqu'il est exécuté dans un système d'assistance selon la revendication 4, mettant en œuvre le procédé selon l'une des revendications 1 à 3.
